# EUROPÄISCHE PATENTSCHRIFT

(11) **EP 0 978 009 B1**
(45) Veröffentlichungstag und Bekanntmachung des Hinweises auf die Patenterteilung: **13.05.2009**
(21) Anmeldenummer: 99914426.4
(22) Anmeldetag: 22.02.1999
(51) Int. Cl.: G02B 21/00

(54) **ANORDNUNG ZUM KALIBRIEREN EINES LASERSCANMIKROSKOPS**
SYSTEM FOR CALIBRATING A LASER SCANNING MICROSCOPE
SYSTEME POUR ETALONNER UN MICROSCOPE A BALAYAGE LASER

(30) Priorität: 20.02.1998 DE 19807072
(43) Veröffentlichungstag der Anmeldung: 09.02.2000
(73) Patentinhaber: Leica Microsystems CMS GmbH, 35578 Wetzlar (DE)
(72) Erfinder: ENGELHARDT, Johann, D-76669 Bad Schönborn (DE)
(74) Vertreter: Reichert, Werner Franz
(86) Internationale Anmeldenummer: PCT/DE1999/000480
(87) Internationale Veröffentlichungsnummer: WO 1999/042885

(56) Entgegenhaltungen:
- EP-A1- 0 230 578
- EP-A1- 0 380 904
- EP-A1- 0 564 178
- US-A- 4 861 982

## Beschreibung

Die Erfindung betrifft eine Anordnung zum Kalibrieren eines vorzugsweise konfokalen Laserscanmikroskops, wobei ein Objekt von einem Scanstrahl abtastbar ist. Des weiteren betrifft die Erfindung ein entsprechendes Verfahren.

Zur Darstellung mikroskopischer Objekte kommen Laserscanmikroskope, insbesondere aber auch konfokale Laserscanmikroskope, immer mehr zur Anwendung. Aufgrund der konfokalen Anordnung eignen sich solche Systeme besonders gut zur dreidimensionalen Abbildung von Strukturen und führen insbesondere bei Fluoreszenzaufnahmen dicker Proben zu ungewohnt guten Bildqualitäten. Bei der Nutzung solcher Systeme zu quantitativen Analysen treten jedoch ganz erhebliche Schwierigkeiten in der Kalibrierung der Systeme auf, und zwar meist dann, wenn absolute Intensitäten zu messen sind.

Die Intensität eines Lasers läßt sich üblicherweise durch Einstellung des Röhrenstroms über einen gewissen Bereich modifizieren. Bei Multiline-Lasern und Mischgaslasern können sich obendrein die Intensitätsverhältnisse der Linien zueinander verändern. Letztendlich treten bei allen Lasern langsame Veränderungen in der Intensität (Driften) und schnelle Veränderungen in der Intensität (Rauschen, Brummen, Modenschwankungen) auf. Eine automatische Lichtregelung des Lasers führt in der Regel zu verkürzten Lebensdauern, wenn nämlich intern Dejustagen auftreten, die wiederum durch einen höheren Strom kompensiert werden.

Ein weiteres Problem ergibt sich wie folgt: Die Pupillenöffnung von Objektiven ist unterschiedlich groß. Da diese jedoch durch den Strahl überleuchtet werden muß, um eine beugungsbegrenzte hohe Auflösung des Mikroskops zu erreichen, gelangen in Abhängigkeit vom Objektiv unterschiedlich große Lichtmengen des aufgeweiteten Lasers zur Probe.

Das konfokale Pinhole vor dem Detektor bzw. vor den Detektoren ist üblicherweise mikromechanisch ausgeführt und bedarf einer Größenkalibrierung. Die Wirkung des Pinholes beim "Ausschneiden" eines Teils der Pointspread-Funktion ist jedoch wiederum von der jeweiligen Vergrößerung abhängig.

Bei konfokalen Laserscanmikroskopen werden üblicherweise Photomultiplier als Detektoren verwendet. Wegen der hohen Dynamik der zu messenden Signale wird üblicherweise die Hochspannung über die Dynoden des Photomultipliers zur Verstärkungseinstellung verwendet. Während für eine bestimmte Hochspannung das Ausgangssignal eines PMT's sich linear zur Eingangsintensität verhält, ist die Verstärkung im PMT nichtlinear abhängig von der Hochspannung und variiert individuell stark.

Ein weiteres Problem liegt darin, daß eine monomode Lichtleitfaser unterschiedliche Lasermoden selektieren kann und dadurch Modenschwankungen des Lasers zu Intensitätsschwankungen führen können. Rückreflexe in den Lasern können die laserinternen Regelmechanismen stören und damit zu Intensitätsschwankungen führen.

Schließlich treten beim schnellen Scannen des Strahls mit Spiegeln durch Trägheitskräfte und Reglerunvollkommenheiten Abweichungen des Scanstrahls von der Sollbahn auf, und zwar insbesondere für die am schnellsten gescannte Koordinate.

Aus praktischen Gründen ist es äußerst aufwendig, all die beteiligten Komponenten de Systems einzeln zu korrigieren und zu kalibrieren.

Kalibrierverfahren sind aus den Druckschriften EP0 380 904 A1, US 4 861 982, EP 0 230 578 A1 und EP 0 564 178 A1 bekannt.

Der Erfindung liegt nun die Aufgabe zugrunde, eine Anordnung zum Kalibrieren eines vorzugsweise konfokalen Laserscanmikroskops anzugeben, welche eine Kalibrierung sämtlicher Komponenten mit einfachen Mitteln zuläßt, wobei ein automatisches Kalibrieren möglich sein soll. Des weiteren ist ein entsprechendes Verfahren anzugeben.

Die erfindungsgemäße Anordnung der gattungsgemäßen Art löst die voranstehende Aufgabe durch die Merkmale des Patentanspruches 1. Danach ist die gattungsgemäß Anordnung zum Kalibrieren eines vorzugsweise konfokalen Laserscanmikroskops gekennzeichnet durch in der Ebene einer Zwischenabbildung angeordnete Kalibriermittel, die ebenfalls von dem Scanstrahl abtastbar sind.

Erfindungsgemäß ist erkannt worden, daß es keinen Sinn macht, sämtliche Komponenten des Systems einzeln zu korrigieren und zu kalibrieren. Vielmehr ist es mit einfachen Mitteln möglich, das System insgesamt bzw. eine Mehrzahl der Komponenten gleichzeitig kalibrieren zu können, wobei Helligkeitsschwankungen der Lichtquelle bei der Detektion berücksichtigbar sind. Ein solches Kalibrieren ist dadurch möglich, daß in der Ebene einer Zwischenabbildung entsprechende Kalibriermittel angeordnet sind, die - wie das Objekt - ebenfalls von dem Scanstrahl anfahrbar bzw. abtastbar sind. Dadurch ist eine Kalibrierung während der eigentlichen Aufnahme bzw. vor und/oder nach dem Scannen des Objekts möglich.

In besonders vorteilhafter Weise sind die Kalibriermittel in der Ebene der Zwischenabbildung in den Bereich des eigentlichen Bildfeldes einschwenkbar. Insoweit werden die Kalibriermittel an die Stelle des Zwischenbilds - in das Bildfeld - gesetzt. Ebenso ist es jedoch auch denkbar, daß die Kalibriermittel am Rande der Zwischenabbildung außerhalb des eigentlichen Bildfeldes angeordnet sind, wobei eine solche Anordnung stationär sein kann. Mechanismen zur Bewegung der Kalibriermittel sind dabei nicht erforderlich, so daß es sich hierbei um eine besonders einfache Ausgestaltung der erfindungsgemäßen Lehre handelt.

Bei den Kalibriermitteln kann es sich einerseits um Meßmittel und andererseits um Referenzstrukturen handeln, je nach dem, welche Komponenten zu kalibrieren sind. Als Meßmittel kommen wiederum Detektionsmittel in Frage, die zur Laserleistungsmessung und Laserkalibrierung dienen. Im Konkreten kann es sich bei den Detektionsmitteln um Photodioden handeln.

Sofern es sich bei den Kalibriermitteln um Referenzstrukturen handelt, steht -je nach der zu kalibrierenden Komponente - eine Vielzahl unterschiedlicher Strukturen zur Verfügung. So können die Referenzstrukturen bspw. als Gitter ausgeführt sein, die zur Bildgrößenkalibrierung und/oder zur Linearitätskalibrierung dienen.

Ebenso ist es denkbar, daß die Referenzstrukturen als Striche ausgeführt sind, die wiederum zur Bildpositionskalibrierung dienen können.

Grundsätzlich können die Referenzstrukturen im Rahmen einer weiteren Ausführungsform als vorzugsweise flächige Muster ausgeführt sein, die zur Phasenkalibrierung von Hin- und Rücklauf des Scanners bzw. Scanstrahls dienen.

Bei den Referenzstrukturen kann es sich ebenso um dreidimensionale Strukturen handeln, die zur Kalibrierung der Optik, bspw. der Pinhole-Position, dienen. Bei den dreidimensionalen Strukturen (3-D-Strukturen) kann es sich um Stufen, Ausnehmungen oder dgl. handeln.

Im Rahmen einer weiteren Ausführungsform der Referenzstrukturen ist es möglich, diese aktiv auszugestalten, so bspw. als Leuchtmittel, die zur Kalibrierung der Detektoren dienen. Die Leuchtmittel können wiederum unterschiedliche Spektren aufweisen, wobei es sich bei den Leuchtmitteln im Konkreten um Leuchtdioden handeln kann.

Schließlich ist es möglich, daß die Referenzstrukturen als Wechselwirkungen mit dem Scanstrahl aufzeigende Mittel ausgeführt sind, wobei es sich dabei vorzugsweise um bekannt reflektierende, absorbierende, fluoreszierende oder polarisierende Mittel handeln kann.

Hinsichtlich der Anordnung der Kalibriermittel - Meßmittel und/oder Referenzstrukturen - ist es von Vorteil, diese rasterförmig oder mäanderförmig anzuordnen. Dazu könnten die Kalibriermittel auf einer Kalibrierschablone angeordnet bzw. ausgebildet sein. Bei der Kalibrierschablone könnte es sich um eine Präzisionsplatine mit geätzten Strukturen handeln. Die Platine selbst könnte wiederum als Epoxidharzplatte ausgeführt sein, und zwar vorzugsweise mit einer Goldbeschichtung, um Langzeitänderungen vorzubeugen.

Insbesondere im Hinblick auf eine stationäre Anordnung der Kalibrierschablone ist es von weiterem Vorteil, wenn diese eine der Größe des Bildfeldes entsprechende Ausnehmung aufweist, durch die der abtastende Scanstrahl ungehindert zur normalen Abbildung hindurchtreten kann. Die Kalibriermittel sind dabei entsprechend am Rand der Kalibrierschablone angeordnet. Die Ausnehmung könnte rund oder quadratisch ausgeführt sein. Entsprechend könnte die Kalibrierschablone eine die Kalibriermittel tragende, vorzugsweise feststehende Kreisringfläche oder - im Rahmen einer quadratischen Ausgestaltung der Kalibrierschablone - eine rahmenähnliche Fläche aufweisen, wobei die Kalibriermittel von den Rahmenschenkeln getragen sind.

Ebenso ist es denkbar, die Kalibrierschablone als in den Strahlengang des Scanstrahls einschwenkbare Scheibe auszuführen, wobei eine solche Ausgestaltung eine entsprechende Mechanik zum Verschwenken der Kalibrierschablone erforderlich macht.

Zur optimalen Kalibrierung der Komponenten sollte die Kalibrierschablone möglichst nahe an dem zu scannenden Objekt angeordnet sein. In ganz besonders vorteilhafter Weise ist die Kalibrierschablone unmittelbar an bzw. vor dem zu scannenden Objekt angeordnet.

Hinsichtlich des erfindungsgemäßen Verfahrene ist die zuvor genannte Aufgabe durch die Merkmale des Patentanspruches 25 gelöst. Danach ist ein gattungsgemäßes Verfahren dadurch gekennzeichnet, daß in der Ebene einer Zwischenabbildung angeordnete Kalibriermittel von dem Scanstrahl abgetastet werden, und zwar ungeachtet dessen, ob die Kalibriermittel sich ständig in der Ebene der Zwischenabbildung befinden oder zum Zwecke der Kalibrierung eingeschwenkt werden. Sofern es sich bei den Kalibriermitteln um stationäre Kalibriermittel handelt, sind diese am Rande der Zwischenabbildung außerhalb des eigentlichen Bildfeldes angeordnet und werden auch dort - außerhalb des eigentlichen Bildfeldes - abgetastet.

Die Kalibrierung kann manuell oder automatisch erfolgen. Dabei ist es denkbar, die Kalibrierung unmittelbar nach dem Einschalten der Laserlichtquelle vorzunehmen. Ebenso ist es jedoch auch möglich, die Kalibrierung vor und/oder nach der Objektabtastung bzw. Bildaufnahme durchzuführen, und zwar ebenfalls manuell oder automatisch.

Schließlich könnte man die Kalibrierung zur automatischen Datenkorrektur nutzen, wobei einerseits die Kalibrierdaten und andererseits die Meßwerte einem Rechner zuzuführen und dort zu verarbeiten sind.

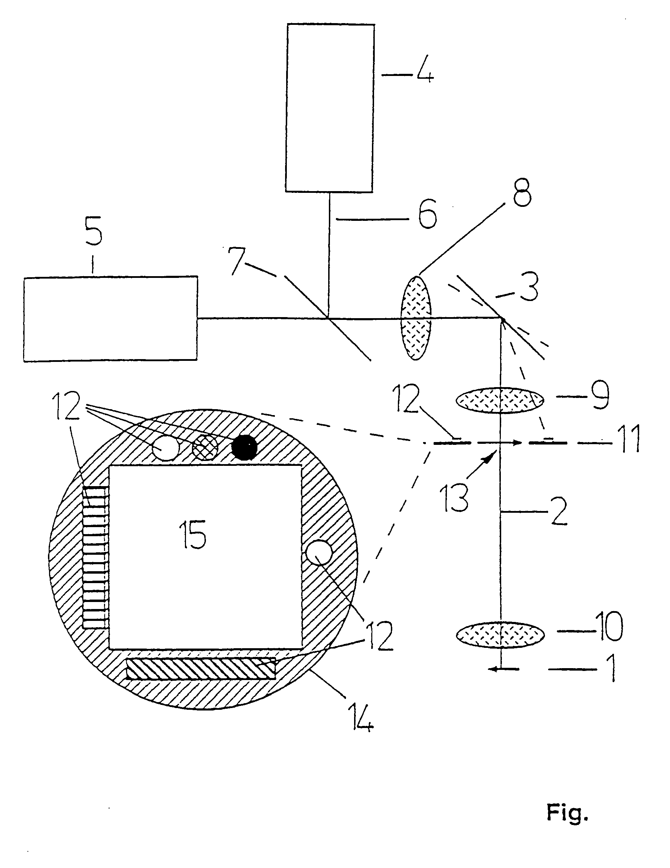

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 25 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
- die einzige Figur: in einer schematischen Darstellung die prinzipielle Anordnung eines konfokalen Laserscanmikroskops mit angedeutetem Zwischenbild.

Die einzige Figur zeigt in schematischer Darstellung eine Anordnung zum Kalibrieren eines konfokalen Laserscanmikroskops, wobei ein Objekt 1 von einem Scanstrahl 2 abtastbar ist. Zum besseren Verständnis der erfindungsgemäßen Lehre zeigt die Figur nicht nur den das Objekt 1 abtastenden Scanstrahl 2, sondern auch den Scanner 3, die Laserlichtquelle 4 und den Detektor 5. Der Laserstrahl 6 wird von der Lichtquelle 4 ausgesandt und gelangt über einen Strahlteiler 7 über eine geeignete Optik 8 zum Scanner 3. Von dort aus wird der Scanstrahl 2 über ein Okular 9 und ein Objektiv 10 zum Objekt 1 gelenkt. Zwischen dem Okular 9 und dem Objektiv 10 befindet sich ein Zwischenbild 11, in dessen Ebene die Kalibriermittel 12 angeordnet sind.

Bei dem hier gewählten Ausführungsbeispiel sind die Kalibriermittel 12 am Rande des Zwischenbilds 11 außerhalb des eigentlichen Bildfeldes 13 angeordnet. Dazu ist eine Kalibrierschablone 14 vorgesehen, die eine der Größe des Bildfeldes 13 entsprechende Ausnehmung 15 aufweist. Die Kalibriermittel 12 sind am Rand der Kalibrierschablone 14 angeordnet, wobei hier durch unterschiedliche Symbole unterschiedliche Kalibriermittel 12 schematisch angedeutet sind. Hinsichtlich der in Frage kommenden Kalibriermittel 12 - Meßmittel und Referenzstrukturen - wird zur Vermeidung von Wiederholungen auf den allgemeinen Teil der Beschreibung verwiesen. Wesentlich ist jedenfalls, daß es sich bei den Kalibriermitteln 12 um passive oder aktive Kalibriermittel 12 handeln kann, wobei die passiven Kalibriermittel 12 flächig oder dreidimensional ausgebildet sein können.

Hinsichtlich weiterer vorteilhafter Ausgestaltungen wird zur Vermeidung von Wiederholungen auf den allgemeinen Teil der Beschreibung verwiesen.

### Bezugszeichenliste

- 1: Objekt
- 2: Scanstrahl
- 3: Scanner
- 4: Laserlichtquelle
- 5: Detektor
- 6: Laserstrahl
- 7: Strahlteiler
- 8: Optik
- 9: Okular
- 10: Objektiv
- 11: Zwischenbild
- 12: Kalibriermittel
- 13: Bildfeld
- 14: Kalibrierschablone
- 15: Ausnehmung in der Kalibrierschablone

## Patentansprüche

1. Ein laserscanmikroskop, vorzugsweise ein konfokales Laserscanmikroskop mit einer Anordnung zum Kalibrieren sämtlicher komponenten wobei ein Objekt (1) von einem Scanstrahl (2) abtastbar ist, und wobei
in der Ebene einer Zwischenabbildung (11) Kalibriemiittel (12), die ebenfalls von dem Scanstrahl (2) abtastbar sind, angeordnet sind, **dadurch gekennzeichnet, daß** die Kalibriermittel (12) am Rande der Zwischenabbildung (11) außerhalb des eigentlichen Bildfeldes (13) angeordnet sind.

2. Anordnung nach Anspruch 1, **dadurch gekennzeichnet, daß** die Kalibriermittel (12) in der Ebene der Zwischenabbildung (11) in den Strahlengang des Scanstrahls am Rande der Zwischenabbildung außerhalb des eigentlichen Bildfeldes (13) einschwenkbar sind.

3. Anordnung nach Anspruch 1 oder 2, **dadurch gekennzeichnet , daß** es sich bei den Kalibriermitteln (12) um Meßmittel handelt.

4. Anordnung nach Anspruch 3, **dadurch gekennzeichnet, daß** die Meßmittel als Detektionsmittel ausgeführt sind, die zur Laserleistungsmessung und Laserkalibrierung dienen.

5. Anordnung nach Anspruch 4, **dadurch gekennzeichnet, daß** es sich bei den Detektionsmitteln um Photodioden handelt.

6. Anordnung nach Anspruch 1 oder 2, **dadurch gekennzeichnet, daß** es sich bei den Kalibriermitteln (12) um Referenzstrukturen handelt.

7. Anordnung nach Anspruch 6, **dadurch gekennzeichnet, daß** die Referenzstrukturen als Gitter ausgeführt sind, die zur Bildgrößenkalibrierung und/oder zur Linearitätskalibrierung dienen.

8. Anordnung nach Anspruch 6, **dadurch gekennzeichnet, daß** die Referenzstrukturen als Striche ausgeführt sind, die zur Bildpositionskalibrierung dienen.

9. Anordnung nach Anspruch 6, **dadurch gekennzeichnet, daß** die Referenzstrukturen als vorzugsweise flächige Muster ausgeführt sind, die zur Phasenkalibrierung von Hin- und Rücklauf des Scanners (3) dienen.

10. Anordnung nach Anspruch 6, **dadurch gekennzeichnet, daß** die Referenzstrukturen als 3-D-Strukturen ausgeführt sind, die zur Kalibrierung der Optik, beispielsweise der Pinhole-Position, dienen.

11. Anordnung nach Anspruch 10, **dadurch gekennzeichnet, daß** es sich bei den 3-D-Strukturen um Stufen, Ausnehmungen oder dergleichen handelt.

12. Anordnung nach Anspruch 6, **dadurch gekennzeichnet, daß** die Referenzstrukturen als Leuchtmittel ausgeführt sind, die zur Kalibrierung des Detektors (5) dienen.

13. Anordnung nach Anspruch 12, **dadurch gekennzeichnet, daß** die Leuchtmittel unterschiedliche Spektren umfassen.

14. Anordnung nach Anspruch 12 oder 13, **dadurch gekennzeichnet , daß** es sich bei den Leuchtmitteln um Leuchtdioden handelt.

15. Anordnung nach Anspruch 6, **dadurch gekennzeichnet, daß** die Referenzstrukturen als Wechselwirkungen mit dem Scanstrahl (2) aufzeigende Mittel ausgeführt sind.

16. Anordnung nach Anspruch 15, **dadurch gekennzeichnet, daß** es sich bei den Wechselwirkungen mit dem Scanstrahl (2) aufzeigenden Mitteln um bekannt reflektierende, absorbierende, fluoreszierende oder polarisierende Mittel handelt.

17. Anordnung nach einem der Ansprüche 1 bis 16, **dadurch gekennzeichnet , daß** die Kalibriermittel (12) - Meßmittel und/oder Referenzstrukturen - rasterförmig angeordnet sind.

18. Anordnung nach einem der Ansprüche 1 bis 16, **dadurch gekennzeichnet, daß** die Kalibriermittel (12) - Meßmittel und/oder Refererizstrukturen - mäanderförmig angeordnet sind.

19. Anordnung nach einem der Ansprüche 1 bis 18, **dadurch gekennzeichnet, daß** die Kalibriermittel (12) - Meßmittel und/oder Referenzstrukturen - auf einer Kalibrierschablone (14) angeordnet bzw. ausgebildet sind.

20. Anordnung nach Anspruch 19, **dadurch gekennzeichnet, daß** es sich bei der Kalibrierschablone (14) um eine Präzisionsplatine mit geätzen Strukturen handelt.

21. Anordnung nach Anspruch 20, **dadurch gekennzeichnet, daß** die Platine als vorzugsweise vergoldete Epoxidharzplatte ausgeführt ist.

22. Anordnung nach einem der Ansprüche 19 bis 21, **dadurch gekennzeichnet, daß** die Kalibrierschablone (14) eine der Größe des Bildfeldes (13) entsprechende Ausnehmung (15) aufweist.

23. Anordnung nach einem der Ansprüche 19 bis 21, **dadurch gekennzeichnet, daß** die Kalibrierschablone (14) eine die Kalibriermittel (12) tragende, vorzugsweise feststehende Kreisringfläche umfaßt.

24. Anordnung nach einem der Ansprüche 19 bis 21, **dadurch gekennzeichnet, daß** die Kalibrierschablone (14) als in den Strahlengang des Scanstrahls (2) einschwenkbare Scheibe ausgeführt ist.

25. Verfahren zum Kalibrieren sämtliche komponenten eines vorzugsweise konfokalen Laserscanmikroskops, wobei ein Objekt (1) von einem Scanstrahl (2) abgetastet wird unter Anwendung einer Anordnung nach einem der Ansprüche 1 bis 27, und wobei
in der Ebene einer Zwischenabbildung (11) angeordnete Kalibriermittel (12) von dem Scanstrahl (2) abgetastet werden,
**dadurch gekennzeichnet, daß** die Kalibriermittel (12) am Rande der Zwischenabbildung (11) außerhalb des eigentlichen Bildfeldes (13) abgetastet werden.

26. Verfahren nach Anspruch 25, **dadurch gekennzeichnet, daß** die Kalibrierung unmittelbar nach dem Einschalten der Laserlichtquelle (4) erfolgt.

27. Verfahren nach Anspruch 25, **dadurch gekennzeichnet, daß** die Kalibrierung vor und/oder nach der Objektabtastung bzw. Bildaufnahme erfolgt.

28. Verfahren nach einem der Ansprüche 25 bis 27, **dadurch gekennzeichnet, daß** die Kalibrierung manuell ausgelöst wird.

29. Verfahren nach einem der Ansprüche 25 bis 27, **dadurch gekennzeichnet, daß** die Kalibrierung automatisch ausgelöst wird.

30. Verfahren nach einem der Ansprüche 25 bis 29, **dadurch gekennzeichnet, daß** die Kalibrierung zur automatischen Datenkorrektur genutzt wird.

## Claims

1. Laser scanning microscope, preferably a confocal laser scanning microscope with an arrangement for calibration all of the components, it being possible for an object (1) to be scanned by a scanning beam (2), and there being arranged in the plane of an intermediate image (11) calibration means (12) which can likewise be scanned by the scanning beam (2), **characterized in that** the calibration means (12) are arranged at the edge of the intermediate image (11) outside the actual image field (13).

2. Arrangement according to Claim 1, **characterized in that** the calibration means (12) in the plane of the intermediate image (11) can be swiveled into the beam path of the scanning beam at the edge of the intermediate image outside the actual image field (13).

3. Arrangement according to Claim 1 or 2, **characterized in that** the calibration means (12) are measuring means.

4. Arrangement according to Claim 3, **characterized in that** the measuring means are designed as detection means which serve the purposes of measuring laser power and laser calibration.

5. Arrangement according to Claim 4, **characterized in that** the detection means are photodiodes.

6. Arrangement according to Claim 1 or 2, **characterized in that** the calibration means (12) are reference structures.

7. Arrangement according to Claim 6, **characterized in that** the reference structures are designed as gratings which serve the purposes of calibrating image size and/or calibrating linearity.

8. Arrangement according to Claim 6, **characterized in that** the reference structures are designed as lines which serve the purpose of calibrating image position.

9. Arrangement according to Claim 7, **characterized in that** the reference structures are designed as preferably flat patterns which serve the purpose of calibrating the phase of the outward and return movements of the scanner (3).

10. Arrangement according to Claim 6, **characterized in that** the reference structures are designed as 3-D structures which serve the purpose of calibrating the optical system, for example the pinhole position.

11. Arrangement according to Claim 10, **characterized in that** the 3-D structures are steps, recesses or the like.

12. Arrangement according to Claim 6, **characterized in that** the reference structures are designed as luminous means which serve the purpose of calibrating the detector (5).

13. Arrangement according to Claim 12, **characterized in that** the luminous means cover different spectra.

14. Arrangement according to Claim 12 or 13, **characterized in that** the luminous means are light-emitting diodes.

15. Arrangement according to Claim 6, **characterized in that** the reference structures are designed as means exhibiting interactions with the scanning beam (2).

16. Arrangement according to Claim 15, **characterized in that** the means exhibiting interactions with the scanning beam (2) are known reflecting, absorbing, fluorescing or polarizing means.

17. Arrangement according to one of Claims 1 to 16, **characterized in that** the calibration means (12) - measuring means and/or reference structures - are arranged in matrix form.

18. Arrangement according to one of Claims 1 to 16, **characterized in that** the calibration means (12) - measuring means and/or reference structures - are arranged in meandering form.

19. Arrangement according to one of Claims 1 to 18, **characterized in that** the calibration means (12) - measuring means and/or reference structures - are arranged and/or constructed on a calibration template (14).

20. Arrangement according to Claim 19, **characterized in that** the calibration template (14) is a precision board with etched structures.

21. Arrangement according to Claim 20, **characterized in that** the board is designed as a preferably gilded epoxy resin plate.

22. Arrangement according to one of Claims 19 to 21, **characterized in that** the calibration template (14) has a recess (15) corresponding to the size of the image field (13).

23. Arrangement according to one of Claims 19 to 21, **characterized in that** the calibration template (14) comprises a preferably stationary circular ring surface carrying the calibration means (12).

24. Arrangement according to one of Claims 19 to 21, **characterized in that** the calibration template (14) is designed as a disk which can be swiveled into the beam path of the scanning beam (2).

25. Method for calibrating all of the components of a preferably confocal laser scanning microscope, an object (1) being scanned by a scanning beam (2), by applying an arrangement according to one of Claims 1 to 24, and calibration means (12) arranged in the plane of an intermediate image (11) being scanned by the scanning beam (2), **characterized in that** the calibration means (12) are scanned at the edge of the intermediate image (11) outside the actual image field (13).

26. Method according to Claim 25, **characterized in that** the calibration is performed directly after switching on the laser light source (4).

27. Method according to Claim 25, **characterized in that** the calibration is performed before and/or after scanning the object or recording the image.

28. Method according to one of Claims 25 to 27, **characterized in that** the calibration is initiated manually.

29. Method according to one of Claims 25 to 27, **characterized in that** the calibration is initiated automatically.

30. Method according to one of Claims 25 to 29, **characterized in that** the calibration is used for automatic data correction.

## Revendications

1. Microscope à balayage laser, de préférence microscope confocal à balayage laser, avec un dispositif pour le calibrage de composants divers, dans lequel un objet (1) peut être balayé par un faisceau de balayage (2), et dans lequel sont prévus des moyens de calibrage (12) dans la région d'une image intermédiaire (11), qui peuvent également être balayés par le faisceau de balayage (2), **caractérisé en ce que** les moyens de calibrage (12) se trouvent au bord de l'image intermédiaire (11), à l'extérieur du champ effectif de l'image (13).

2. Dispositif selon la revendication 1, **caractérisé en ce que** dans la région de l'image intermédiaire (11), les moyens de calibrage (12) peuvent être pivotés dans le parcours optique du faisceau de balayage, au bord de l'image intermédiaire à l'extérieur du champ effectif de l'image (13).

3. Dispositif selon l'une des revendications 1 ou 2, **caractérisé en ce que** les moyens de calibrage (12) sont des moyens de mesurage.

4. Dispositif selon la revendication 3, **caractérisé en ce que** les moyens de mesurage sont conçus comme des moyens de détection, servant au mesurage de la performance du laser et au calibrage du laser.

5. Dispositif selon la revendication 4, **caractérisé en ce que** les moyens de détection sont des diodes photo-détectrices.

6. Dispositif selon l'une des revendications 1 ou 2, **caractérisé en ce que** les moyens de calibrage (12) sont des structures de référence.

7. Dispositif selon la revendication 6, **caractérisé en ce que** les structures de référence sont conçues comme des grilles, servant au calibrage de la taille d'image et/ou au calibrage de la linéarité.

8. Dispositif selon la revendication 6, **caractérisé en ce que** les structures de référence sont conçues comme des traits, servant au calibrage de la position de l'image.

9. Dispositif selon la revendication 6, **caractérisé en ce que** les structures de référence sont conçues de préférence comme un motif à deux dimensions, servant au calibrage des phases d'aller et de retour du scanner (3).

10. Dispositif selon la revendication 6, **caractérisé en ce que** les structures de référence sont conçues comme des structures en 3-D, servant au calibrage de l'optique, par exemple de la position de Pinhole.

11. Dispositif selon la revendication 10, **caractérisé en ce que** les structures en 3-D sont des escaliers, des évidements ou autres.

12. Dispositif selon la revendication 6, **caractérisé en ce que** les structures de référence sont conçues comme des éléments lumineux, servant au calibrage du détecteur (5).

13. Dispositif selon la revendication 12, **caractérisé en ce que** les éléments lumineux comprennent différents spectres.

14. Dispositif selon l'une des revendications 12 ou 13, **caractérisé en ce que** les éléments lumineux sont des diodes électroluminescentes.

15. Dispositif selon la revendication 6, **caractérisé en ce que** les structures de référence sont conçues comme des moyens indiquant des interactions avec le faisceau de balayage (2).

16. Dispositif selon la revendication 15, **caractérisé en ce que** les moyens indiquant des interactions avec le faisceau de balayage (2) sont des moyens connus pour être réfléchissants, absorbants, fluorescents ou polarisants.

17. Dispositif selon l'une des revendications 1 à 16, **caractérisé en ce que** les moyens de calibrage (12) - moyens de mesurage et/ou structures de référence - sont disposés à la façon d'une grille.

18. Dispositif selon l'une des revendications 1 à 16, **caractérisé en ce que** les moyens de calibrage (12) - moyens de mesurage et/ou structures de référence - sont disposés en forme de méandres.

19. Dispositif selon l'une des revendications 1 à 18, **caractérisé en ce que** les moyens de calibrage (12) - moyens de mesurage et/ou structures de référence - sont disposés ou formés sur un gabarit de calibrage (14).

20. Dispositif selon la revendication 19, **caractérisé en ce que** le patron de calibrage (14) est une platine de précision avec des structures gravées.

21. Dispositif selon la revendication 20, **caractérisé en ce que** la platine est de préférence conçue comme une plaque de résine époxyde dorée.

22. Dispositif selon l'une des revendications 19 à 21, **caractérisé en ce que** le patron de calibrage (14) comporte un évidement (15) correspondant à la taille du champ d'image (13).

23. Dispositif selon l'une des revendications 19 à 21, **caractérisé en ce que** le patron de calibrage (14) comprend une surface circulaire annulaire, de préférence immobile, portant les moyens de calibrage (12).

24. Dispositif selon l'une des revendications 19 à 21, **caractérisé en ce que** le patron de calibrage (14) est conçu comme un disque capable de pivoter dans le trajet du faisceau de balayage (2).

25. Procédé pour le calibrage de divers composants d'un microscope confocal à balayage laser, dans lequel un objet (1) est balayé par un faisceau de balayage (2), et qui emploie un dispositif selon l'une des revendications 1 à 24, et dans lequel des moyens de calibrage (12) situés dans la région d'une image intermédiaire (11) sont balayés par le faisceau de balayage (2), **caractérisé en ce que** les moyens de calibrage (12) sont balayés au bord de l'image intermédiaire (11), à l'extérieur du champ effectif de l'image (13).

26. Procédé selon la revendication 25, **caractérisé en ce que** le calibrage a lieu immédiatement après l'allumage de la source de lumière laser (4).

27. Procédé selon la revendication 25, **caractérisé en ce que** le calibrage a lieu avant et/ou après le balayage de l'objet ou la prise de vue.

28. Procédé selon l'une des revendications 25 à 27, **caractérisé en ce que** le calibrage est déclenché manuellement.

29. Procédé selon l'une des revendications 25 à 27, **caractérisé en ce que** le calibrage est déclenché automatiquement.

30. Procédé selon l'une des revendications 25 à 29, **caractérisé en ce que** le calibrage est utilisé pour la correction automatique des données.
